# EUROPEAN PATENT SPECIFICATION

(11) **EP 3 377 741 B1**
(45) Date of publication and mention of the grant of the patent: **08.09.2021**
(21) Application number: 16810002.2
(22) Date of filing: 04.11.2016
(51) Int. Cl.: F02B 19/08, F02B 19/10, F02B 19/12, F02B 19/18

(54) **INTERNAL COMBUSTION ENGINE AND METHOD OF OPERATING IT**
VERBRENNUNGSMOTOR UND VERFAHREN ZUM BETREIBEN
MOTEUR À COMBUSTION INTERNE ET PROCÉDÉ DE FONCTIONNEMENT

(30) Priority: 17.11.2015 GB 201520221; 19.01.2016 GB 201600971; 23.03.2016 GB 201604930; 28.07.2016 GB 201613034
(43) Date of publication of application: 26.09.2018
(73) Proprietor: Motodan Limited, Warwick CV34 4HU (GB)
(72) Inventor: MERRITT, Dan, Coventry CV3 6FY (GB)
(74) Representative: Blower, Timothy John
(86) International application number: PCT/GB2016/000199
(87) International publication number: WO 2017/085440

(56) References cited:
- EP-A1- 0 420 456
- EP-A2- 1 108 873
- WO-A1-2005/052335
- WO-A1-2005/111393
- DE-A1- 10 320 891
- DE-A1- 19 536 098
- US-A1- 2015 176 458

## Description

### Field of the Invention

The present invention relates to an internal combustion engine, but more particularly to controlling its operation to reduce or minimise output of pollutant gases.

### Background of the Invention

Various internal combustion engines which can be classified as stratified charge engines invented by the inventor herein are known for example from international publications WO 2005/052335 and WO/2007/080366. Those engines are now recognised in the literature as Merritt Engines.

The main constructional characteristic of the Merritt Engine resides in use of a separate combustion chamber spaced away from the cylinder to avoid burning fuel in the region of the cylinder above the piston. The Merritt Engine like the Otto engine uses spark ignition and gasoline or other volatile liquid hydrocarbons as fuel. It can operate either on the four-stroke or on the two-stroke engine cycle.

The use of such a separate combustion chamber allows the Merritt engine to stratify the air/fuel mixture, enabling reliable spark ignition without throttling the air intake. This, coupled with rapid combustion resulting from vortex motion in the combustion chamber, as well as lower radiation heat loss from burning gases, promote higher thermal efficiency at part load compared with throttled engines such as the Otto gasoline engine. When operating unthrottled, the Merritt Engine uses more air than is needed for complete combustion at part load and therefore has free Oxygen present in its exhaust gases. The Merritt Engine is suitable for use in automotive and motor- cycle applications and therefore it needs to meet legislated exhaust emission limits which can differ country by country. The present invention provides two new methods of operation for the Merritt type engine, which methods can be used singly or in combination. When combined, the present methods enable the exhaust gas to be substantially Oxygen free enabling use of a catalytic converter to remove offending quantities of Nitrogen Oxides from the exhaust gases, which will be referred to as NOx for short. Because NOx only appears in the Merritt Engine's exhaust at higher indicated means effective pressures (IMEP) values, both methods are preferably deployed together only under such operating conditions, and they are preferably devised to be applied or disengaged whilst the engine is operating. Removal of excess Oxygen from the combustion chamber can be effected by one of the two methods which is partial throttling of the engine's air intake but this preferably is arranged only to take place at higher indicated mean effective pressure (IMEP) values. A second problem requires removal of free Oxygen from the bump clearance. The bump clearance is the volume remaining in the cylinder above the piston at the end of the compression stroke which, even when minimised, contains an appreciable amount of Oxygen because of high gas density, ten percent is a realistic example. Since the Merritt Engine has a separate combustion chamber this Oxygen is normally unusable for combustion purposes. The Merritt Engine relies on a GDI (gasoline direct injector) fuel injector situated in the separate combustion chamber and its fuel spray cone is discharged towards the far end of that combustion chamber, away from the cylinder.

This aspect of the invention provides an effective solution to the bump clearance Oxygen removal problem by another method of engine operation that focuses upon a modified fuel injection process. This method when used on its own can also offer other advantages to the Merritt engine, in addition to NOx reduction or removal.

### Summary of the Invention

The present invention seeks to provide a modified internal combustion engine, improved methods of operating same, and motor vehicles fitted with such an engine.

Accordingly, this invention provides an internal combustion engine comprising;
a cylinder;
a cylinder head to close the cylinder at one end;
a piston located in the cylinder for reciprocating movements therein;
an unavoidable bump clearance volume in the cylinder situated above the piston when the piston reaches the end of the compression stroke;
air inlet means communicating with the cylinder for intake of air into the engine;
exhaust means communicating with the cylinder;
a combustion chamber within the cylinder head having a near end and a far end relative to the cylinder, said chamber being spaced from the cylinder but communicating therewith at its near end;
a transfer orifice communicating with the cylinder and the combustion chamber at its near end positioned to deliver a jet of air into the combustion chamber with a tangential velocity component during the compression stroke of the piston;
means to promote an axial velocity component to swirling air motion generated within the combustion chamber;
a single fuel injection means communicating with the combustion chamber at its near end arranged to deliver liquid fuel spray towards the far end of the chamber and into the air jet;
at least one ignition means in the region of the far end of the combustion chamber;
a controller to control at least the fuel injection process, the ignition process, and the air intake processes;
wherein, a primary method of operation of said engine is activated by the controller enabling diversion of a controlled amount of fuel from the fuel injector outlet in the separate combustion chamber into that cylinder volume above the piston, after the ignition means in the combustion chamber ignites the fuel therein and can continue until after the piston commences its expansion stroke and a secondary method of engine operation is activated by the controller, comprising partial restriction of air intake to the engine to minimise or avoid free Oxygen in the combustion chamber and bump clearance after the fuel inside the engine is burnt.

Preferably the combustion chamber is configured to induce or enhance swirling flow of air when delivered therein. The combustion chamber could operate as a vortex tube. The combustion chamber could be cylindrical, conical or part-conical in shape, for example.

The air inlet means includes a throttle valve situated upstream of an inlet valve to bring into effect the said secondary method of operation.

The ignition means typically comprise a spark plug.

The exhaust means can also include a catalytic converter capable of Nitrogen Oxides removal situated downstream of an exhaust valve.

The term clearance volume means the sum of the volume within the combustion chamber plus the bump clearance volume.

The term TDC (top dead centre) describes the position of the piston at the end of its compression stroke.

The term BDC (bottom dead centre) describes the position of the piston at the end of its expansion stroke.

The term swept volume describes the volume contained in the cylinder between the TDC and BDC piston positions.

The term NOx means Nitrogen Oxides gases as are typically contained in the exhaust gases.

The term IMEP describes the indicated means effective pressure developed in the cylinder, and is indicative of engine's load and torque output.

The term peak pressure describes the maximum cylinder pressure achieved during an engine cycle.

The term constant volume combustion describes a very rapid fuel burn process where the whole combustion process takes place within a few crank angle degrees near TDC.

The term thermal efficiency describes the ratio between the work energy output and the heat energy input during the same number of engine cycles;

The term stratification describes a fuel/air mixture preparation process which deliberately avoids formation of a homogeneous mixture in the combustion chamber and instead creates a zoned mixture formation where a rich zone containing relatively more fuel is placed near the spark plug to enable spark ignition and a weak zone containing less fuel or even no fuel at all, arises elsewhere in the combustion chamber spaced away from the spark plug. The spark ignites the mixture in the rich zone and the energy produced by the flame is sufficient to ignite fuel in the weak zone. The Merritt Engine produces a very effective stratification system which allows it to operate completely unthrottled when use of a catalytic converter is not required.

In order that the invention in all its aspects may be illustrated, more easily appreciated and readily carried into effect by those skilled in the art, embodiments will now be described herein purely by way of non-limiting examples with reference to the accompanying three schematic diagrams which are not drawn to scale and are presented for illustrative purposes only, wherein:

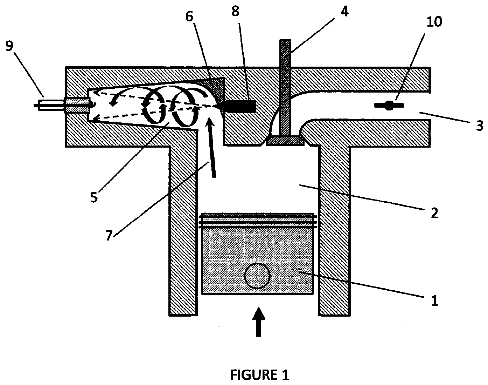

Figure 1 is a sectional view through part of a Merritt type internal combustion engine cylinder and cylinder head arrangement, with throttle valve fully opened (unthrottled),

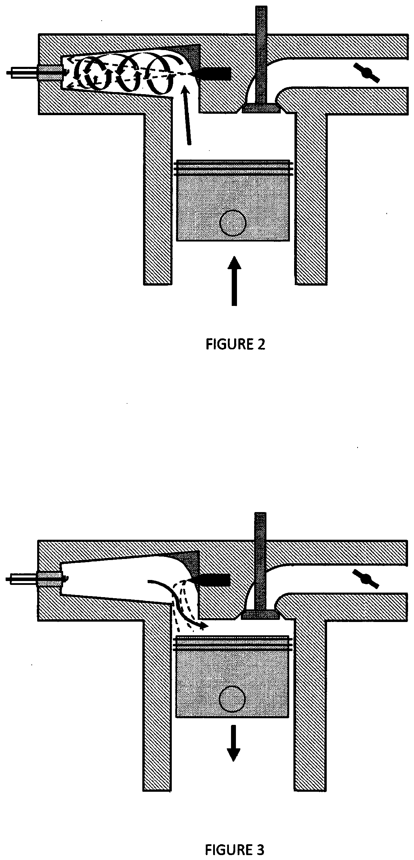

Figure 2 is a view similar to Figure 1, illustrative of the secondary method of operation with throttle valve partially closed, and
Figure 3 is a view similar to Figure 1 with piston commencing travel away from TDC and so illustrative of the primary and secondary methods of operation of the engine.

### Brief description of the drawings

Figure-1 is also used to explain the engine components. The engine shown needs to be equipped with a throttle valve which is shown and also a catalytic converter which is not shown in the drawings. These two items are only needed to remove NOx pollutants under certain conditions but are not essential for the operation of the engine which can operate, without utilising the new methods according to this invention, as an unmodified Merritt Engine with a fully open throttle valve. Figure-1 shows the engine when not utilising the new operational methods according to this invention. Piston (1) is shown in the middle of the compression stroke in cylinder (2) when operating at approximately 25% of its maximum IMEP with an overall air/fuel ratio of approximately 60 to one.

Over this lower end of IMEP the engine does not produce much NOx exhaust emissions and can therefore operate unthrottled, within allowed NOx emission limits, to deliver high thermal efficiency as an unmodified Merritt Engine. The throttle valve (10) is shown fully open. The fuel injector (8) is shown delivering a cone of liquid fuel towards spark plug (9) at the far end of the combustion chamber. The transfer Orifice (7) shows a streamline of air entering the combustion chamber (5) to form a fierce vortex type swirling air motion and a helical ramp (6) is shown imparting an axial component to the swirling gases directed towards the spark plug, a motion which can be described as helical swirl. One breathing valve (4) is shown in the closed position during the compression stroke downstream of the throttle valve (10), it is the air inlet means. A catalytic converter will be situated in the exhaust pipe of engines according to all three figures although it is not shown because the inlet pipe (3) is shown in preference to exhaust outlet to illustrate the variable position of the throttle valve (10).

Figure-2 also illustrates the piston during the compression stroke as does Figure-1 but the throttle valve (10) is shown in a partially closed position and the engine is operating at an increased fuelling rate at approximately 80% of its maximum IMEP, when the amounts of NOx gases produced during combustion exceed allowed emission limits. In Figure-3 the engine of Figure -2 is shown a short time later when the piston has started moving during its expansion stroke.

It should be appreciated that the Merritt Engine's stratified charge combustion system enables it to completely burn any amount of fuel within the combustion chamber in the presence of any amount of excess air.

### Detailed description of the drawings

The engine illustrated in Figure-1 can operate unthrottled over the range of air fuel ratios varying from approximately 120:1 at idling to the illustrated value of 60:1 A ratio of 120:1 represents eight times more air than needed for complete combustion and 60:1 represents four times more air. Figure-1 is chosen to illustrate an air fuel ratio of 60:1 which is assumed, for the sake of illustration, to be the threshold value of IMEP which does not produce enough NOx in the exhaust to exceed the permissible quantity under emission legislation.

The amount of air transferred from the cylinder into the combustion chamber per unit time increases during the compression stroke. The amount of fuel injected by injector (6) into the air jet emerging from transfer orifice (7) is delivered at approximately constant rate. The resulting air fuel mixture will therefore start off rich and end lean over the compression stroke period. The vortex motion imparted to the mixture is biased in the direction towards the spark plug (9) by the helical ramp (6), so early rich mixture is forced to rotate around the plug. As the vortex becomes more intense it smears the mixture around the periphery of the chamber (5) and centrifugal force compresses it to a thin compacted layer. The molecules of Oxygen and fuel are brought into closer proximity as a result and flame propagation after ignition is very fast.

The engine illustrated in Figure-1 illustrates how the Merritt Engine works but does not explain any of the two new methods of operation according to the current invention.

The operation of the engine according to this invention is explained by way of an example in Figure-2. The piston is shown in mid compression stroke at a fuelling rate which produces an IMEP value of 80% of maximum value. At this IMEP, it is assumed that the exhaust gases will contain an amount of NOx gases which will require the use of the catalytic converter. The controller will need to eliminate all free Oxygen from the exhaust gas to enable the catalytic converter to function. The controller is programmed to recognise that this happens at this IMEP value by recognising the total cyclic fuel quantity being delivered to produce this IMEP.

In order to substantially reduce and even eliminate free Oxygen from the exhaust gases the controller needs to use both methods of operation according to the present invention and to apply them simultaneously.

### The partial throttling method of operation

This method is illustrated in Figure-2. At the higher end of the IMEP range the controller is programmed to move the throttle valve to a pre-determined partially closed position to reduce slightly the amount of air entering the engine. The reduction of air intake will reduce the amount of available Oxygen to match the amount of fuel being delivered for burning within the combustion chamber to ensure that all or substantially all the Oxygen in the chamber is consumed by combustion. It needs pointing out that the throttle valve is closing when the IMEP of the Merritt Engine is rising which is the exact opposite operation required from a throttle valve in conventional Otto engines.

Rather than snap the throttle valve directly into its partially closed position, the controller can begin slowly to close it at fuelling levels corresponding to IMEP slightly below 80%, when NOx emission is still below legislated limit, so allowing it to reach the correct position when required for action. As the car driver increases IMEP demand above 80% the throttle valve changes direction until it reaches the fully open position at maximum IMEP when the fuel input consumes all or substantially all of the available Oxygen.

An Oxygen sensor such as the familiar Lambda sensor can monitor Oxygen presence in the exhaust gas and provide a feed back to the controller in order to effect fine adjustments to the throttle valve position.

The need to remove all free Oxygen from the exhaust gases to enable the use of the catalytic converter cannot be achieved by partial throttling alone, the simultaneous application of the other method of the present invention, is required.

### The extended fuel injection period (primary) method of operation

When the piston reaches TDC at the end of the compression stroke there must remain a small clearance volume between its crown and the cylinder head to avoid damaging contact. This volume is often called bump clearance volume. The design of the Merritt Engine tries to minimise the bump clearance volume in order to maximise the volume of the combustion chamber because all the fuel is delivered for burning within the chamber. An additional method is required to remove the Oxygen from the bump clearance. This additional method is illustrated in Figure-3.

Because the fuel injector (8) delivers fuel at high pressure inside the combustion chamber and in the opposite direction to the transfer orifice (7), it would appear impossible to deliver fuel to the bump clearance volume without installing a second fuel injector pointing down into the transfer orifice. Such a second injector was proposed in an earlier Merritt Engine invention for the purpose of increasing power density. It can be seen in the patent publication WO 2007/080366 in Figure-8. The primary method according to the present invention offers a much simpler solution to this problem which does not require a second fuel injector per cylinder.

To operate this method the controller modifies the timing of fuel delivery whilst controlling the total fuel quantity required per engine cycle. Normally in the Merritt Engine fuel is injected during the compression stroke in order to form the stratified charge in the combustion chamber and Injection stops before the end of the compression stroke and before spark ignition occurs. The method of operation according to this invention requires to prolong fuel injection either until after the spark ignition event or until after the beginning of the expansion stroke or preferably after both events. The capability to inject fuel against post ignition pressures is made possible by the gasoline direct injection system, called GDI. The extended injection period can be a continuation of a prolonged uninterrupted first injection period or it can be achieved in two or more distinct actuations of the fuel injector if time allows.

This method of operation enables transfer of fuel from the fuel injector's outlet location in combustion chamber (8) into the cylinder (2) for the purpose of consuming Oxygen trapped within the bump clearance volume. The transfer is carried out by entraining some of the fuel into the dense gas which begins to flow towards the cylinder either when the expansion stroke starts or after spark ignition occurs and always after both events take place. After ignition such dense gas is very hot possibly still burning. Figure-3 illustrates expanding gas flowing into the cylinder through the transfer orifice (7) and into cylinder (2). The hot burning gas will entrain the fuel, vaporise it and divert it away from the combustion chamber (5) into the cylinder (2). It will most probably also ignite to burn with bump clearance Oxygen because the application of this method will take place at the higher end of IMEP. The extra amount of fuel delivered and diverted during the prolonged injection period suffice to use up all the free Oxygen trapped in the bump clearance within the cylinder in order to meet the objective of Oxygen free exhaust. If the ignition of the fuel delivered during the extended injection period fails a second ignition means can be used to intercept the mixture as it enters the cylinder. The second ignition means is not illustrated in the diagrams but it can be a glow plug which can be continuously energised.

This method of operation effectively allows the engine controller to operate two combustion events, the first inside the combustion chamber and the second inside the cylinder.

The two new methods according to this invention namely the extended fuel injection and partial throttling need to be used together at the higher end of IMEP in order to enable the use of a catalytic converter to remove NOx from the exhaust. However the extended fuel injection method when used on its own can also offer four other operational capabilities which enhance engine performance.

### Additional operational capabilities

These can be applied by the engine controller whilst the engine is operating. Some of the capabilities are unusual in other internal combustion engines.
1. It allows the engine controller to limit the peak pressures produced at high IMEP operations;
2. It allows the engine controller to increase the maximum power density when operating at maximum IMEP, by providing fuel to burn with the Oxygen trapped in the bump clearance.
3. It allows the engine controller to choose to increase the amount of heat discarded in the exhaust gases if such extra heat is required for cabin heating inside a car;
4. It allows the engine to discard the partial use of throttle in countries which do not impose NOx limits whilst retaining the first three additional capabilities listed above or by restricting maximum IMEP subject to car driver's control it allows a car to dispense with the use of a catalytic converter whilst benefiting from maximum thermal efficiency and minimum exhaust pollution at the expense of reduced power density.

### First Capability:

The vortex tube type gas movement in the combustion chamber, forces fuel and air molecules to be compressed nearer together against its periphery by centrifugal force. As a result the combustion process in the Merritt engine is extremely fast compared with diesel and even Otto engines combustion speeds. At moderate engine speeds the Merritt Engine can operate nearly on the constant volume air cycle which delivers the highest thermal efficiency of unthrottled car engines in common use. However at the higher IMEP range and lower engine speeds very fast combustion can cause excessive peak pressures in the cylinder which can even damage the piston. The extended fuel injection method according to this invention enables the late fuel delivery to burn inside the cylinder after the piston moves away from TDC to expose an increased cylinder volume so reducing the peak cyclic pressures. At lower engine speeds it may be preferable to operate the fuel injector according to this method aspect twice in quick succession to cause two such combustion events within the cylinder, alternatively the rate of fuel injection per unit time may be reduced by the controller to enable one long injection event astride TDC.

Second capability. When extended fuel injection is exercised by the controller at high IMEP operations the ignition of the late fuel delivery by very hot gases escaping into the cylinder is very likely to occur without the need to activate a second ignition means. Also under these conditions it is likely that NOx control will also be needed in some countries so the first capability will also become operational bringing the throttle valve into play. When used on its own, even when the engine is turbocharged, that method aspect can allow the engine to consume all available Oxygen for combustion so maximising power output.

### Third capability

Deliberate increase of heat energy rejected into the engine exhaust will understandably lower thermal efficiency of the engine. However engines with very high thermal efficiency such as the Merritt Engine are sometimes unable to generate sufficient waste heat to provide cabin heating in cold climates. The amount of heat rejected can be increased by deliberately burning fuel during the expansion stroke. Stratification in the Merritt engine enables burning of fuel with excess air inside the combustion chamber, so removing fuel from that chamber to burn within the cylinder during the expansion stroke is possible to increase the amount of heat rejected with exhaust gases. The third capability may be needed at low to mid-range IMEP values where ignition of the late fuel delivery may require assistance from a secondary ignition means. Such means may need to be located near the transfer orifice exit aperture on the cylinder head. A glow plug is a suitable such secondary ignition means, because it can be energised continuously without pre-igniting the fuel delivered inside the combustion chamber before spark ignition or before the start of the expansion stroke. Alternatively the transfer orifice itself can be thermally insulated to maintain a high temperature for example by a layer of ceramic, which can even be sputtered with a little Platinum catalyst to assist the second ignition event when necessary.

### Fourth capability:

When operating at moderate IMEP and including starting and idling, the Merritt Engine emits very small quantities of NOx which can be below the legal limits for exhaust emissions. The use of the two methods of operation according to this invention can be disabled when operating at such range of IMEP whereupon the engine can then revert to operate as an unmodified and unthrottled lean burn Merritt type engine with very high thermal efficiency and low NOx emission capability. This invention allows the engine controller to recognise when to engage one or both methods of operation, by monitoring the amount of fuel delivered per engine cycle, and act in accordance with a plan which is programmed for automatic engagement and disengagement without interrupting the engine's operation.

The selection can be done by the car's driver by a throw of a switch, or by car manufacturers who can deliberately de-rate engine output IMEP to ensure low emission of NOx and Carbon dioxide, albeit at the expense of reduced vehicle performance.

## Claims

1. A method of operating a stratified charge spark ignited internal combustion engine comprising:
at least one cylinder (2);
a cylinder head to close the cylinder at one end;
a piston located in the cylinder for reciprocating movements therein (1);
an unavoidable bump clearance volume in the cylinder (2) situated above the piston (1) when the piston reaches the end of its compression stroke;
air inlet means communicating with the cylinder (3);
exhaust means communicating with the cylinder;
a combustion chamber (5) within the cylinder head;
the combustion chamber having a near end and a far end relative to the cylinder, said chamber being spaced from the cylinder but communicating therewith at its near end;
a transfer orifice (7) communicating between the cylinder (2) and the combustion chamber (5) positioned at the near end of the combustion chamber to deliver a jet of air into the combustion chamber with a tangential velocity component during the compression stroke of the piston (1);
at least one ignition means (9) in the region of the far end of the combustion chamber;
means (6) to promote an axial velocity component to swirling air motion within the combustion chamber in a direction towards the ignition means at the far end of the combustion chamber;
a single fuel injection means (8) per cylinder communicating directly with the combustion chamber, the fuel injection means being situated at the near end of the combustion chamber and arranged to deliver liquid fuel spray towards the far end of said combustion chamber and into the jet of air;
and a controller to control the fuel injection process, the ignition process and air intake process;
**characterised in that**:
the air inlet means (3) includes a throttle valve (10) operable from fully open to partial closure;
in one operating method, at relatively low indicated mean effective pressure (IMEP), the throttle is fully open and all
of the fuel is injected before the piston commences its expansion stroke;
in another operating method, at relatively high IMEP, the throttle is partially closed and the controller is enabled to inject fuel during both the compression stroke and during the early part of the expansion stroke, said method comprising controlled delivery of an amount of fuel from the single fuel injection means (8) to burn in the bump clearance volume above the piston inside the cylinder (2), the delivery of the fuel amount being timed to occur after the ignition means (9) ignites fuel in the combustion chamber and after the piston (1) commences its expansion stroke, wherein the amount of fuel is transferred into the bump clearance volume by expanding gases flowing from the combustion chamber (5) towards the cylinder (2) to burn with oxygen trapped in the bump clearance volume.

2. A method as claimed in claim 1, in which the exhaust means is coupled to a catalytic converter.

3. A method as claimed in any preceding claim, wherein a second ignition means, such as a glow plug, is provided in the region of the exit from the transfer orifice (7) into the cylinder (2).

4. A method as claimed in any preceding claim, in which the surface of the transfer orifice (7) is selected from one or more of the following: made of material of poor thermal conductivity; covered with thermal insulation material such as ceramic; and/or covered with catalytic material such as platinum.

5. A method as claimed in any preceding claim, in which the fuel injection means (8) is controlled to deliver fuel in two pulses or a series of multiple pulses during one engine cycle.

6. An engine as defined in claim 1 provided with a controller as defined in claim 1 configured to carry out the method in accordance with any preceding claim.

7. An engine as claimed in claim 6, in which the controller is able to select or de-select the method or methods as claimed in any of claims 1 to 5.

8. An engine as claimed in claim 7, in which the selection is effected based on the amount of fuel delivered per engine cycle and without interruption of engine operation.

9. An engine as claimed in any of the claims 6-8, operating on a four stroke cycle or a two stroke cycle.

10. A motor vehicle fitted with an engine as defined in any one of claims 6 to 9.

## Patentansprüche

1. Verfahren zum Betreiben eines funkengezündeten Schichtladungsverbrennungsmotors, umfassend:
mindestens einen Zylinder (2);
einen Zylinderkopf zum Schließen des Zylinders an einem Ende;
einen Kolben, der sich in dem Zylinder befindet, für Hin- und Herbewegungen darin (1);
ein unvermeidbares Axialspielvolumen in dem Zylinder (2), das oberhalb des Kolbens (1) befindlich ist, wenn der Kolben das Ende seines Verdichtungshubs erreicht;
Lufteinlassmittel, das mit dem Zylinder (3) kommuniziert;
Auslassmittel, das mit dem Zylinder kommuniziert;
eine Brennkammer (5) innerhalb des Zylinderkopfs;
wobei die Brennkammer ein nahes Ende und ein fernes Ende relativ zu dem Zylinder aufweist, wobei die Kammer von dem Zylinder beabstandet ist, an seinem nahen Ende aber damit kommuniziert;
eine Transferöffnung (7), die zwischen dem Zylinder (2) und der Brennkammer (5) kommuniziert, die am nahen Ende der Brennkammer positioniert ist, um einen Luftstrahl in die Brennkammer mit einer Tangentialgeschwindigkeitskomponente während des Verdichtungshubs des Kolbens (1) abzugeben;
mindestens ein Zündmittel (9) im Bereich des fernen Endes der Brennkammer;
Mittel (6) zum Begünstigen einer Axialgeschwindigkeitskomponente zur wirbelnden Luftbewegung innerhalb der Brennkammer in einer Richtung hin zum Zündmittel am fernen Ende der Brennkammer;
ein einziges Kraftstoffeinspritzmittel (8) pro Zylinder, das direkt mit der Brennkammer kommuniziert, wobei sich das Kraftstoffeinspritzmittel am nahen Ende der Brennkammer befindet und angeordnet ist, um flüssiges Kraftstoffspray hin zum fernen Ende der Brennkammer und in den Luftstrahl abzugeben;
und ein Steuergerät zum Steuern des Kraftstoffeinspritzvorgangs, des Zündvorgangs und Luftansaugvorgangs;
**dadurch gekennzeichnet, dass**:
das Lufteinlassmittel (3) ein Drosselventil (10) beinhaltet, das von ganz offen bis teilweise geschlossen betreibbar ist;
in einem Betriebsverfahren, bei relativ niedrigem angezeigtem mittlerem wirksamem Druck (IMEP), die Drossel ganz offen ist und der gesamte Kraftstoff eingespritzt wird, bevor der Kolben mit seinem Expansionshub beginnt;
in einem anderen Betriebsverfahren, bei relativ hohem IMEP, die Drossel teilweise geschlossen ist und das Steuergerät imstande ist, Kraftstoff sowohl während des Verdichtungshubs als auch während des Frühstadiums des Expansionshubs einzuspritzen, wobei das Verfahren die kontrollierte Abgabe einer Kraftstoffmenge aus dem einzigen Kraftstoffeinspritzmittel (8), zum Verbrennen im Axialspielvolumen oberhalb des Kolbens innen im Zylinder (2), umfasst, wobei die Abgabe der Kraftstoffmenge so getimt ist, dass sie erfolgt, nachdem das Zündmittel (9) Kraftstoff in der Brennkammer zündete und nachdem der Kolben (1) mit seinem Expansionshub begann, wobei die Kraftstoffmenge in das Axialspielvolumen transferiert wird, indem expandierende Gase von der Brennkammer (5) hin zu dem Zylinder (2), zum Verbrennen mit im Axialspielvolumen gefangenem Sauerstoff, strömen.

2. Verfahren nach Anspruch 1, wobei das Auslassmittel an einen Katalysator gekoppelt ist.

3. Verfahren nach einem vorhergehenden Anspruch, wobei ein zweites Zündmittel, wie eine Glühkerze, im Bereich des Austritts aus der Transferöffnung (7) in den Zylinder (2) bereitgestellt ist.

4. Verfahren nach einem vorhergehenden Anspruch, wobei die Oberfläche der Transferöffnung (7) ausgewählt ist aus einem oder mehreren der folgenden: bestehend aus Material mit schlechter Wärmeleitfähigkeit; abgedeckt mit Wärmeisoliermaterial wie Keramik; und/oder abgedeckt mit katalytischem Material wie Platin.

5. Verfahren nach einem vorhergehenden Anspruch, wobei das Kraftstoffeinspritzmittel (8) gesteuert wird, um Kraftstoff in zwei Pulsen oder einer Reihe von multiplen Pulsen während eines Motortakts abzugeben.

6. Motor wie in Anspruch 1 definiert, der mit einem Steuergerät wie in Anspruch 1 definiert versehen und dafür konfiguriert ist, das Verfahren nach einem vorhergehenden Anspruch auszuführen.

7. Motor nach Anspruch 6, wobei das Steuergerät imstande ist, das oder die Verfahren nach einem der Ansprüche 1 bis 5 aus- oder abzuwählen.

8. Motor nach Anspruch 7, wobei die Auswahl auf Basis der pro Motortakt und ohne Unterbrechung des Motorbetriebs abgegebenen Kraftstoffmenge erfolgt.

9. Motor wie in einem der Ansprüche 6 bis 8 definiert, der in einem Viertaktzyklus oder einem Zweitaktzyklus arbeitet.

10. Kraftfahrzeug, das mit einem Motor wie in einem der Ansprüche 6 bis 9 definiert ausgerüstet ist.

## Revendications

1. Procédé de fonctionnement d'un moteur à combustion interne à allumage par étincelles à charge stratifiée, comprenant :
au moins un cylindre (2) ;
une culasse pour fermer le cylindre au niveau d'une extrémité ;
un piston situé dans le cylindre pour y effectuer des mouvements de va-et-vient (1) ;
un espace mort inévitable dans le cylindre (2), situé au-dessus du piston (1) quand le piston atteint la fin de sa course de compression ;
un moyen d'admission d'air qui communique avec le cylindre (3) ;
un moyen d'échappement qui communique avec le cylindre ;
une chambre de combustion (5) dans la culasse ;
la chambre de combustion ayant une extrémité proximale et une extrémité distale par rapport au cylindre, ladite chambre étant espacée du cylindre mais communiquant avec lui au niveau de son extrémité proximale ;
un orifice de transfert (7) qui communique entre le cylindre (2) et la chambre de combustion (5) et qui est positionné au niveau de l'extrémité proximale de la chambre de combustion pour délivrer un jet d'air dans la chambre de combustion avec une composante de vitesse tangentielle pendant la course de compression du piston (1) ;
au moyen un moyen d'allumage (9) dans la région de l'extrémité distale de la chambre de combustion ;
un moyen (6) pour favoriser une composante de vitesse axiale d'un mouvement de turbulence dans la chambre de combustion dans une direction vers le moyen d'allumage au niveau de l'extrémité distale de la chambre de combustion ;
un seul moyen d'injection de carburant (8) par cylindre, qui communique directement avec la chambre de combustion, le moyen d'injection de carburant étant situé au niveau de l'extrémité proximale de la chambre de combustion et conçu pour délivrer un jet de carburant liquide vers l'extrémité distale de ladite chambre de combustion et dans le jet d'air ;
et un dispositif de commande pour commander le processus d'injection de carburant, le processus d'allumage et le processus d'admission d'air ;
**caractérisé en ce que** :
le moyen d'admission d'air (3) inclut un papillon des gaz (10) fonctionnel d'une ouverture complète à une fermeture partielle ;
dans un procédé de fonctionnement, à une pression moyenne effective indiquée (PMEI) relativement basse, le papillon est entièrement ouvert et tout le carburant est injecté avant que le piston ne commence sa course de détente ;
dans un autre procédé de fonctionnement, à une PMEI relativement haute, le papillon est partiellement fermé et le dispositif de commande est activé pour injecter du carburant pendant la course de compression et pendant la partie initiale de la course de détente, ledit procédé comprenant une distribution commandée d'une quantité de carburant par le seul moyen d'injection de carburant (8) en vue de sa combustion dans l'espace mort au-dessus du piston à l'intérieur du cylindre (2), la distribution de la quantité de carburant étant temporisée pour qu'elle se produise après l'allumage du carburant par le moyen d'allumage (9) dans la chambre de combustion et après le début de la course de détente du piston (1), la quantité de carburant étant transférée dans l'espace mort en détendant les gaz circulant depuis la chambre de combustion (5) vers le cylindre (2) en vue de leur combustion avec l'oxygène piégé dans l'espace mort.

2. Procédé selon la revendication 1, dans lequel le moyen d'échappement est accouplé à un convertisseur catalytique.

3. Procédé selon l'une quelconque des revendications précédentes, dans lequel un second moyen d'allumage, comme une bougie de préchauffage, est situé dans la région de la sortie de l'orifice de transfert (7) dans le cylindre (2).

4. Procédé selon l'une quelconque des revendications précédentes, dans lequel la surface de l'orifice de transfert (7) est choisie parmi une ou plusieurs des possibilités suivantes : fabriquée dans un matériau à faible conductivité thermique ; recouverte avec un matériau d'isolation comme de la céramique ; et/ou recouverte avec un matériau catalytique comme du platine.

5. Procédé selon l'une quelconque des revendications précédentes, dans lequel le moyen d'injection de carburant (8) est commandé pour distribuer du carburant en deux impulsions ou en une série de multiples impulsions pendant un cycle du moteur.

6. Moteur selon la revendication 1 muni d'un dispositif de commande selon la revendication 1 configuré pour réaliser le procédé selon l'une quelconque des revendications précédentes.

7. Moteur selon la revendication 6, dans lequel le dispositif de commande est en mesure de sélectionner ou désélectionner le procédé ou les procédés selon l'une quelconque des revendications 1 à 5.

8. Moteur selon la revendication 7, dans lequel la sélection est effectuée sur la base de la quantité de carburant délivrée par cycle du moteur et sans interruption du fonctionnement du moteur.

9. Moteur selon l'une quelconque des revendications 6 à 8, fonctionnant sur un cycle à quatre temps ou un cycle à deux temps.

10. Véhicule à moteur équipé d'un moteur selon l'une quelconque des revendications 6 à 9.
